**Europäisches Patentamt**

**European Patent Office**

**Office européen des brevets**

(19)

(11) Veröffentlichungsnummer : **0 033 784**
**B1**

(12) **EUROPÄISCHE PATENTSCHRIFT**

(45) Veröffentlichungstag der Patentschrift :
05.06.85

(51) Int. Cl.⁴ : **B 60 H   3/06**, B 01 D 53/02,
B 01 D 53/36

(21) Anmeldenummer : 80108263.7

(22) Anmeldetag : 31.12.80

(54) **Mehrschichtengasfilter.**

(30) Priorität : 03.01.80 DE 3000078
15.01.80 DE 3001210
16.01.80 DE 3001336
16.01.80 DE 3001393
08.02.80 DE 3004675
20.02.80 DE 3006323
16.05.80 DE 3018695
26.07.80 DE 3028433

(43) Veröffentlichungstag der Anmeldung :
19.08.81 Patentblatt 81/33

(45) Bekanntmachung des Hinweises auf die Patenterteilung : 05.06.85 Patentblatt 85/23

(84) Benannte Vertragsstaaten :
AT CH FR GB IT LI NL SE

(56) Entgegenhaltungen :
DE-A- 1 505 473
DE-A- 2 241 647
DE-A- 2 259 628
DE-A- 2 347 335
DE-A- 2 416 805
DE-A- 2 603 750
DE-A- 2 635 860
DE-A- 2 832 349
US-A- 2 013 601

(73) Patentinhaber : Hölter, Heinz, Dipl.-Ing.
Beisenstrasse 39-41
D-4390 Gladbeck (DE)

(72) Erfinder : Hölter, Heinz, Ing.
Beisenstrasse 39-41
D-4390 Gladbeck (DE)
Erfinder : Igelbüscher, Heinrich, Ing.
Marcq-en-Baroeul-Strasse 60
D-4390 Gladbeck (DE)
Erfinder : Gresch, Heinrich, Ing.
Franz Lehàr-Strasse 25
D-46 Dortmund-Wickede (DE)
Erfinder : Dewert, Heribert, Ing.
Bahnhofstrasse 23
D-4390 Gladbeck (DE)

(74) Vertreter : Spalthoff, Adolf, Dipl.-Ing.
Peimanstrasse 31 P.O. Box 34 02 20
D-4300 Essen 1 (DE)

Jouve, 18, rue St-Denis, 75001 Paris, France

## Beschreibung

Die Erfindung betrifft einen Mehrschichtengasfilter zur Reinigung von mit Schadstoffen belasteter Luft, wobei die Luft beim Durchlauf eine Erwärmung und nach Verlassen des Mehrschichtengasfilters eine Abkühlung erfährt und der Mehrschichtengasfilter eine Chemisorptionsfilterstufe enthält.

Durch die DE-A-26 03 750 ist eine Belüftungsvorrichtung mit einem Mehrschichtengasfilter vorgenannter Art bekannt. Bei dieser Belüftungsvorrichtung wird die angesaugte Luft über ein Grobstaubfilter, ein Feinfilter mit einem Schwebstoffilter und einen Gasfilter geführt, welcher ein Sorptionsmittel enthält. Vor Eintritt in den Gasfilter erführt die zu reinigende Luft in einer Peltierbatterie eine Erwärmung und nach dem Austritt aus dem Gasfilter ebenfalls in der Peltierbatterie eine Abkühlung. Bei dieser bekannten Belüftungsvorrichtung findet eine zentrale Erwärmung der zu reinigenden Luft vor dem Eintritt in den Gasfilter statt und danach eine Abkühlung, bevor die Luft in den Innenraum des Fahrzeuges austritt.

Von diesem Stand der Technik ausgehend liegt der Erfindung die Aufgabe zugrunde, einen Mehrschichtengasfilter der eingangs genannten Art zu schaffen, welcher in einfacher Weise eine einwandfreie Reinigung der zugeführten Luft ermöglicht und überdies hohe Standzeiten aufweist.

Gemäß der Erfindung wird dies dadurch erreicht, daß der Chemisorptionsfilterstufe eine Katalysatorstufe nachgeordnet ist und vor der Katalysatorstufe eine Luftvorwärmstufe vorgesehen ist. Die angesaugte, von Schadstoffen zu befreiende Luft wird zuerst in der vorhandenen natürlichen Temperatur durch eine Chemisorptionsfilterstufe geführt und hier von sauren Gasen, Kohlenwasserstoffen und festen Stoffen, wie Staub usw., befreit und anschließend über eine Luftvorwärmstufe soweit aufgeheizt, daß der Wasserdampfdruck der Luft über dem Feuchtigkeitsaufnahmepunkt der nachgeschalteten Katalysatorstufe zur Wandlung von CO in $CO_2$ ausreicht und die nach dem Durchfließen der Katalysatorstufe diese von Schadstoffen befreite Luft einer Kühlzone zugeführt wird, die soweit die Luft abkühlt, wie es dem Arbeitsplatz in dem Innenraum dienlich ist.

Vorteilhaft ist die Luftvorwärmstufe für eine Erwärmung auf oberhalb 50 °C ausgelegt.

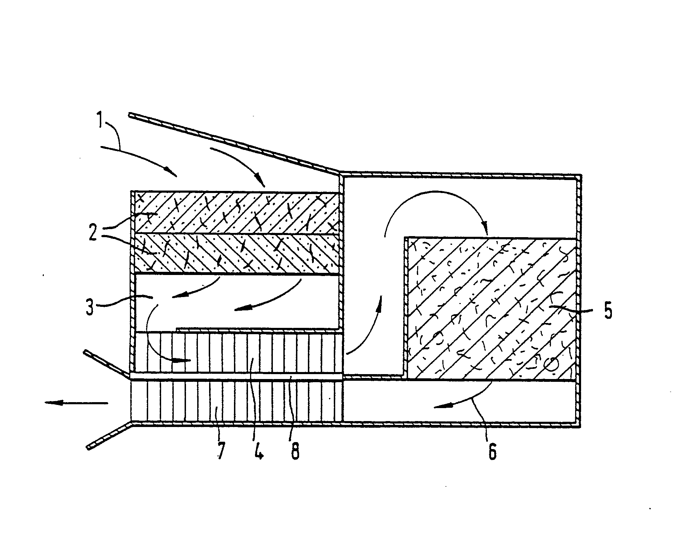

Ein Ausführungsbeispiel der Erfindung ist an Hand der Zeichnung näher erläutert, und zwar zeigt diese eine geschnittene Ansicht des Mehrschichtengasfilters.

Um die Heizleistung nicht zu hoch wählen zu müssen, wird nur die Luft aufgeheizt, die katalytisch CO in $CO_2$ wandeln soll.

Mit 1 ist die Anströmseite der Schadstoff enthaltenden Luft bezeichnet, welche über die Chemisorptionsfilterstufe 2 zur Abscheidung von sauren Gasen, wie z. B. $SO_2$, $NO_x$, Kohlenwasserstoffen und auch festen staubförmigen Schadstoffen dienen. Der Kanal 3 dient als Auffangraum für das vorgereinigte Gas, welches der Luftvorwärmstufe 4, z. B. deren aufgeheizten Rippen, zugeführt wird. Von der Luftvorwärmstufe 4 gelangt das vorgereinigte Gas durch die Katalysatorstufe 5, z. B. Hopkalit, in welcher CO in $CO_2$ umgewandelt wird. Die aus der Katalysatorstufe 5 austretende gereinigte atembare Luft ist mit 6 bezeichnet, die den Kühlrippen 7 zur Abkühlung und zur späteren Verwendung als Atemluft zugeleitet wird. Mit 8 ist ein kombiniertes wärme-kälteerzeugendes Aggregat bezeichnet, welches auf der einen Seite die vorgereinigte Luft über die Luftvorwärmstufe 4 aufheizt und auf der anderen Seite mit ihrer Kühlwirkung abkühlt. Zu diesem Zweck können an sich bekannte Peltierelemente eingesetzt werden.

Die angesaugte, mit Schadstoffen belastete Luft wird zuerst durch eine Chemisorptionsfilterstufe gedrückt oder gesaugt und hier von sauren Gasen, festen Stoffen und Kohlenwasserstoffen befreit, um anschließend soweit erwärmt zu werden, daß der Wasserdampfdruck der Luft über dem Feuchtigkeitsaufnahmepunkt der Katalysatorstufe liegt und anschließend die Luft über die Kühlleistung der erwärmenden Aggregate und/oder auch durch zusätzliche Kühlaggregate bedarfsgerecht soweit heruntergekühlt wird, daß z. B. für den Sommerbetrieb dieses Aggregat nicht nur als Chemisorptionsfilter, sondern auch gleichzeitig als Klimaanlage für Arbeitsschutz- oder Fahrerkabinen genutzt werden kann. Die Luft wird vorzugsweise auf um 50 °C aufgeheizt, um beim Durchfließen der Katalysatorstufe diesen nicht durch Feuchtigkeitsaufnahme inaktiv werden zu lassen.

## Patentansprüche

1. Mehrschichtengasfilter zur Reinigung von mit Schadstoffen belasteter Luft, wobei die Luft beim Durchlauf eine Erwärmung und nach Verlassen des Mehrschichtengasfilters eine Abkühlung erfährt und der Mehrschichtengasfilter eine Chemisorptionsfilterstufe (2) enthält, dadurch gekennzeichnet, daß der Chemisorptionsfilterstufe (2) eine Katalysatorstufe (5) nachgeordnet ist und vor der Katalysatorstufe (5) eine Luftvorwärmstufe (4) vorgesehen ist.

2. Mehrschichtengasfilter nach Anspruch 1, dadurch gekennzeichnet, daß die Luftvorwärmstufe (4) für eine Erwärmung auf oberhalb 50 °C ausgelegt ist.

## Claims

1. Multi-layer gas filter for cleaning air charged with harmful substances, the air, as it passes through the filter, undergoing a heating up followed by a cooling after it leaves the multi-layer gas filter, the latter comprising a chemical adsorption filter stage (2), characterised in that the chemical adsorption filter stage (2) has on its downstream side a catalyst stage (5) which is preceded by an air pre-heating stage (4).

2. Multi-layer gas filter according to Claim 1, characterised in that the air pre-heating stage (4) is designed to heat to above 50 °C.

**Revendications**

1. Filtre à gaz multicouches pour l'épuration de l'air chargé de substances nocives, l'air subissant un chauffage lors de son passage et un refroidissement à la sortie du filtre, et le filtre contenant un étage de filtrage (2) à sorption chimique, caractérisé par le fait qu'en aval de l'étage de filtrage (2) à sorption chimique est installé un étage catalyseur (5) et qu'en amont de l'étage catalyseur (5) est prévu un étage (4) de préchauffage de l'air.

2. Filtre à gaz multicouches selon la revendication 1, caractérisé par le fait que l'étage (4) de préchauffage de l'air est établi pour un chauffage supérieur à 50 °C.